Europäisches Patentamt

European Patent Office

Office européen des brevets

(19)

(11) Veröffentlichungsnummer: **0 034 728**
**B1**

(12) # EUROPÄISCHE PATENTSCHRIFT

(45) Veröffentlichungstag der Patentschrift:
**16.01.85**

(21) Anmeldenummer: **81100702.0**

(22) Anmeldetag: **31.01.81**

(51) Int. Cl.⁴: **F 15 B 15/02**, B 23 B 31/30,
F 16 L 27/08

(54) **Einrichtung zur Zuführung von Druckmittel aus einem ortsfesten in ein rotierendes Bauteil.**

(30) Priorität: **16.02.80 DE 3005863**
**16.02.80 DE 3005935**

(43) Veröffentlichungstag der Anmeldung:
**02.09.81 Patentblatt 81/35**

(45) Bekanntmachung des Hinweises auf die Patenterteilung:
**16.01.85 Patentblatt 85/3**

(84) Benannte Vertragsstaaten:
**AT BE CH DE FR GB IT LI NL SE**

(56) Entgegenhaltungen:
**DE - A - 2 136 742**
**DE - A - 2 325 624**
**DE - A - 2 601 315**
**DE - B - 1 263 419**
**DE - U - 7 917 739**
**SU - A - 174 926**
**US - A - 2 458 343**

(73) Patentinhaber: **SMW Schneider & Weisshaupt GmbH,
Wiesentalstrasse 28, D-7996 Meckenbeuren (DE)**

(72) Erfinder: **Hiestand, Karl, Mühlweg 2, D-7798 Pfullendorf
(DE)**

(74) Vertreter: **Engelhardt, Guido, Dipl.-Ing.,
Montafonstrasse 35 Postfach 1350,
D-7990 Friedrichshafen 1 (DE)**

**Beschreibung**

Die Erfindung bezieht sich auf eine Einrichtung zur Zuführung von Druckmittel aus einem ortsfest angeordneten Bauteil in ein darin gelagertes rotierendes Bauteil, insbesondere zur Zuführung von Druckmittel in einen Hohlspannzylinder oder dgl., wobei die Bauteile einen Dichtspalt einschliessen und eines der Bauteile im Bereich des Dichtspaltes zur Übertragung des Druckmediums eine umlaufende Ringnut aufweist, die über einen Kanal im ortsfesten Bauteil an eine Druckmittelzuführungsleitung und über einen Kanal im rotierenden Bauteil an einen Verbraucher angeschlossen ist.

Eine Druckmittelzuführung dieser Art ist durch das DE-U-7 917 739 bekannt. Zur Überleitung des Druckmediums aus dem ortsfest angeordneten Zuführungsring in eine in diesen eingreifende Nabe ist in diese ein zu dem Verbraucher führender Kanal eingearbeitet, der an einen in dem Zuführungsring vorgesehenen, umlaufenden und mit der Druckmittelzuführungsleitung verbundenen Ringkanal angeschlossen ist. Und an diesen Ringkanal schliesst sich beidseitig ein somit zwischen den relativ zueinander bewegten Bauteilen angeordneter Dichtspalt an, aus dem bei einer Druckmittelzuführung Druckmedium austritt. Da beide Bauteile mit einem gewissen Spiel ineinander zu lagern sind, um Wärmedehnungen auszugleichen, ist die Menge des abströmenden Mediums erheblich. Vor allem aber ist von Nachteil, dass, da sich auch in dem Dichtspalt Druck aufbaut, die Spalthöhe in Abhängigkeit von dem Druckmitteldruck vergrössert wird. Dadurch wird wiederum die Menge des aus dem Dichtspalt ausströmenden Druckmediums in einem erheblichen Masse vergrössert. Und um diese grossen Leckverluste auszugleichen, ist eine hohe Pumpleistung erforderlich, auch müssen die Querschnitte der Zuführungs- und Rückführungsleitungen entsprechend gross dimensioniert werden. Die bekannte Druckmittelzuführungseinrichtung erfordert somit bei einer Übertragung eines Druckmediums hohen Druckes einen erheblichen Bau- und Betriebsaufwand, um dies überhaupt bewerkstelligen zu können. Eine vielseitige Anwendbarkeit ist daher nicht gegeben.

Es ist demnach Aufgabe der Erfindung, die Druckmittelzuführungseinrichtung der vorgenannten Art so zu verbessern, dass der Dichtspalt zwischen den beiden relativ zueinander bewegten Bauteilen auch bei einer Übertragung eines Druckmediums hohen Druckes nicht vergrössert wird und die Leckmenge sich nicht in einer unzulässigen Weise erhöht. Vielmehr soll erreicht werden, dass das durch den Dichtspalt abströmende Druckmedium auch bei einem hohen Druck nahezu konstant bleibt, so dass eine exakte Bemessung des Dichtspaltes, ausgehend von einer Mindestleckmenge, um die anfallende Wärme abzuführen und um bei Inbetriebnahme der Druckmittelzuführungseinrichtung diese sofort mit voller Drehzahl anfahren zu können, möglich ist. Ausserdem soll der dazu erforderliche Bau- und Fertigungsaufwand äusserst gering gehalten werden.

Gemäss der Erfindung wird dies dadurch erreicht, dass eines der beiden Bauteile auf seiner dem Dichtspalt zugewandten Seite einen diesen begrenzenden dünnwandigen, elastisch verformbaren Ring aufweist, wobei im Bereich der Ringnut auf der dem Dichtspalt abgewandten Seite des Ringes eine umlaufende Druckkammer angeordnet ist, die zur Erzeugung einer auf den Ring in Richtung des Dichtspaltes gerichteten Kraft an eine Druckmittelquelle angeschlossen ist.

Nach einer Weiterbildung können in eines der beiden Bauteile mehrere, vorzugsweise von dem das Druckmittel zuführenden Kanal getrennte, die Ringnut umgebende Druckkammern eingearbeitet werden.

Die Druckkammern können an den das Druckmittel führenden Kanal der Druckmittelzuführungseinrichtung oder an eine gesonderte Druckmittelquelle angeschlossen werden, wobei bei an den Druckmittel führenden Kanal angeschlossenen Druckkammern deren in Richtung der Ringnut beaufschlagte Fläche grösser zu bemessen ist als die beaufschlagte Gegenfläche der Ringnut.

Zweckmässig ist es ferner, die Druckkammer durch in die diese begrenzenden Bauteile eingesetzte Dichtungen abzudichten.

Werden bei der Druckmittelzuführungseinrichtung der eingangs genannten Gattung ein den Dichtspalt begrenzender dünnwandiger Ring sowie im Bereich der Ringnut eine oder mehrere umlaufende von Druckmittel beaufschlagbare Druckkammern vorgesehen, so ist es möglich, eine in Richtung des Dichtspaltes gerichtete Kraft zu erzeugen, durch die der Ring geringfügig derart elastisch verformt wird, dass die Höhe des Dichtspaltes auch bei hohen Druckmitteldrücken konstant gehalten werden kann und sich dieser somit nicht vergrössert. Der in den Druckkammern aufgebaute Druck bewirkt nämlich eine Kraft, die der Druckkraft in der Ringnut und dem Dichtspalt entgegengerichtet ist. Selbstverständlich ist eine entsprechende Dimensionierung der Druckkammer im Verhältnis zur Ringnut erforderlich, ebenso sind die einzelnen Bauteile derart auszubilden, dass der Ring elastisch verformbar, das dieses abstützende Teil dagegen formstabil ist.

Mit steigendem Druckmitteldruck wird somit auch die Gegenkraft erhöht, so dass der Dichtspalt in seiner Höhe nahezu konstant bleibt oder auch geringfügig verkleinert wird. Die Menge des abströmenden Druckmittels wird demnach trotz hohen Druckmitteldruckes auch nicht grösser, sondern bleibt vielmehr ebenso konstant. Der erforderliche Bauaufwand, um eine Druckmittelzuführungseinrichtung zu schaffen, bei der, und zwar auch bei hohem Druckmitteldruck, die Leckmenge konstant gehalten werden kann, ist somit äusserst gering. Dabei ist es ferner von Vorteil, dass die Druckkammern auch von einem andersartigen Druckmedium, z.B. Luft beaufschlagt werden können, während über die Ringnut Drucköl übertragen wird.

In der Zeichnung sind zwei Ausführungsbeispiele der gemäss der Erfindung ausgebildeten Einrichtung zur Zuführung von Druckmittel aus einem ortsfesten in ein rotierendes Bauteil dargestellt und nachfolgend im einzelnen erläutert. Hierbei zeigen:

Fig. 1 eine Druckmittelzuführungseinrichtung mit in dem ortsfesten Bauteil vorgesehener Ringnut mit umgebender Druckkammer,

Fig. 2 die Druckmittelzuführungseinrichtung nach Fig. 1 mit zwei gesonderten Druckkammern und

Fig. 3 eine Druckmittelzuführungseinrichtung mit in dem rotierenden Bauteil angeordneter Druckkammer.

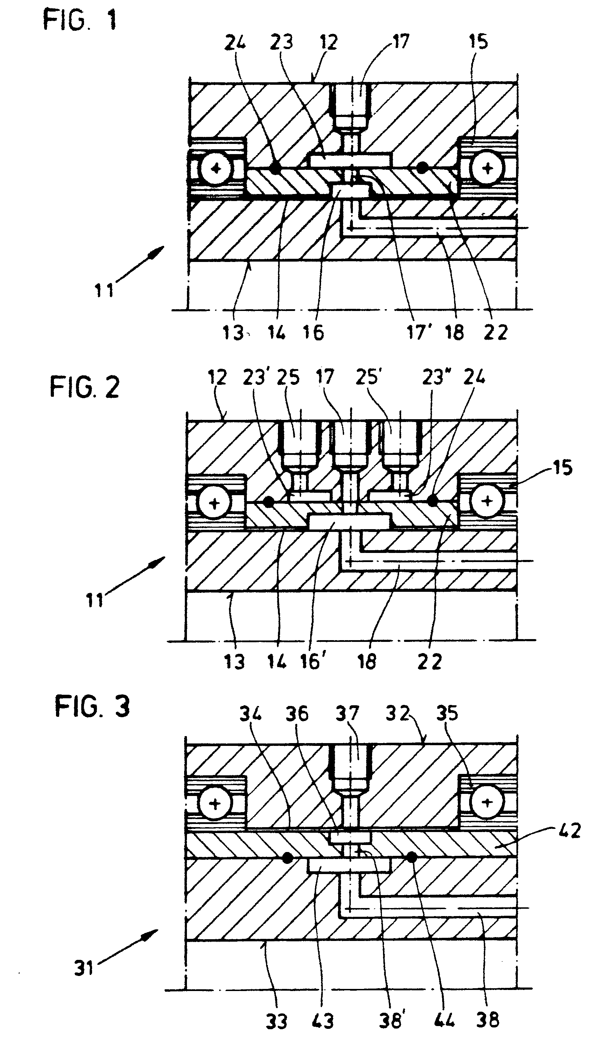

Die Druckmittelzuführungseinrichtung 11 nach den Fig. 1 und 2 besteht aus einem ortsfesten Bauteil 12 und einem in dieses eingreifenden rotierenden Bauteil 13, die einen Dichtspalt 14 einschliessen und mittels Wälzlager 15 drehbar ineinander gelagert sind. Zur Überleitung des Druckmediums aus dem ortsfesten Bauteil 12, das auf seiner dem Dichtspalt 14 zugewandten Seite einen diesen begrenzenden dünnwandigen elastisch verformbaren Ring 22 aufweist, in das rotierende Bauteil 13 ist in den Ring 22 eine Ringnut 16 eingearbeitet, der das Druckmittel über Kanäle 17 und 17' zuströmt und die über einen in dem rotierenden Bauteil 13 eingearbeiteten Kanal 18 an einen Verbraucher angeschlossen ist.

Bei einer Druckmittelübertragung strömt somit aus der Ringnut 16 über den Dichtspalt 14 Druckmittel ab, und zwar in einem nicht unerheblichen Masse. Zum Teil ist dies zwar erwünscht, um die hier anfallende Reibungswärme abzuführen, anderseits soll die austretende Leckmenge jedoch gering gehalten werden. Durch den sich in der Ringnut 16 aufbauenden Druck würde allerdings der Dichtspalt 14 aufgeweitet werden, so dass auch die Leckmenge stark ansteigen würde. Und um dies mit Sicherheit auszuschliessen, ist in dem ortsfesten Bauteil 12 eine die Ringnut 16 umfassende Druckkammer 23 vorgesehen, deren in Richtung des Dichtspaltes 14 gerichtete Fläche grösser bemessen ist als die Gegenfläche der Ringnut 16.

Auf diese Weise wird in der Druckkammer 23, in die der Druckmittelkanal 17 mündet und die über den Kanal 17' mit der Ringnut 16 verbunden ist, durch den sich aufbauenden Druck eine auf den inneren Ring 22 einwirkende Kraft erzeugt, die bewirkt, dass dieser, da er dünnwandig ausgebildet ist, in Richtung des Dichtspaltes 14 elastisch verformt wird. Das ortsfeste Bauteil 12 bleibt dagegen formstabil und nimmt die nach aussen gerichteten Kräfte auf. Der Dichtspalt 14 wird somit in Abhängigkeit von der Druckhöhe des zugeführten Druckmediums verkleinert, so dass trotz erhöhten Druckes die Menge des abströmenden Druckmediums konstant gehalten werden kann und eine Vergrösserung des Dichtspaltes 14 in seiner Höhe ausgeschlossen ist.

Mittels zwischen dem ortsfesten Bauteil 12 und dem Ring 22, die auch aufgeschrumpft sein können, eingesetzter Dichtungen 24 ist die Druckkammer 23 druckdicht gestaltet. Der Ring 22 wirkt somit gewissermassen in Richtung des Dichtspaltes 14 als Membran, um diesen konstant zu halten.

Nach Fig. 2 sind zwei die Ringnut 16' umgebende Druckkammern 23' und 23'' vorgesehen, die über Kanäle 25 und 25' an eine gesonderte Druckmittelquelle angeschlossen sind. In den Druckkammern 23' und 23'' kann somit unabhängig von einer Druckmittelübertragung über die Ringnut 16' ein Druck aufgebaut werden, um den Dichtspalt 14 in seiner Höhe konstant zu halten bzw. zu verkleinern.

Bei der Druckmittelzuführungseinrichtung 31 nach Fig. 3, die in gleicher Weise wirksam ist wie die Ausgestaltung nach Fig. 1, ist die die Ringnut 36 umgebende Druckkammer 43 in dem rotierenden Bauteil 33 angeordnet, das auf seiner dem Dichtspalt 34 zugewandten Seite mit einem diesen begrenzenden dünnwandigen, elastisch verformbaren Ring 42 versehen ist. Mittels Dichtungen 44 ist die Druckkammer 43, die über einen Kanal 38' mit der Ringnut 36 und über einen Kanal 38 mit einem Verbraucher verbunden ist, abgedichtet.

Der von dem ortsfesten Bauteil 32 und dem in diesem mittels Wälzlager 35 gelagerten rotierenden Bauteil 33 bzw. dem Ring 42 eingeschlossenen Dichtspalt 34 wird somit bei einer Druckmittelzuführung über den Kanal 37 ebenfalls verkleinert bzw. konstant gehalten, da in der Druckkammer 43 ein Druck aufgebaut wird. Und durch die in Richtung des Dichtspaltes 34 auf den Ring 42 einwirkende Kraft wird dieser elastisch verformt, so dass in Abhängigkeit von dem Druckmitteldruck und somit auch bei einem hohen Druckmitteldruck die Leckmenge konstant bleibt.

**Patentansprüche**

1. Einrichtung (11, 31) zur Zuführung von Druckmittel aus einem ortsfest angeordneten Bauteil (12, 32) in ein darin gelagertes rotierendes Bauteil (13, 33), insbesondere zur Zuführung von Druckmittel in einen Hohlspannzylinder oder dgl., wobei die Bauteile einen Dichtspalt (14, 34) einschliessen und eines der Bauteile (12, 33) im Bereich des Dichtspaltes zur Übertragung des Druckmediums eine umlaufende Ringnut (16, 16', 36) aufweist, die über einen Kanal (17, 17', 37) im ortsfesten Bauteil (12, 32) an eine Druckmittelzuführungsleitung und über einen Kanal (18; 38', 38) im rotierenden Bauteil (13, 33) an einen Verbraucher angeschlossen ist, dadurch gekennzeichnet, dass eines der beiden Bauteile (12, 33) auf seiner dem Dichtspalt (14, 34) zugewandten Seite einen diesen begrenzenden dünnwandigen, elastisch verformbaren Ring (22, 42) aufweist, wobei im Bereich der Ringnut (16, 16', 36) auf dem Dichtspalt (14, 34) abgewandten Seite des Ringes (22, 42) eine umlaufende Druckkammer (23; 23', 23''; 43) angeordnet ist, die zur Erzeugung einer auf den Ring (22, 42) in Richtung des Dichtspaltes (14, 34) gerichteten Kraft an eine Druckmittelquelle angeschlossen ist.

2. Druckmittelzuführungseinrichtung nach Anspruch 1, dadurch gekennzeichnet, dass in eines der beiden Bauteile (12) mehrere, vorzugsweise von dem das Druckmittel zuführenden Kanal (17) getrennte, die Ringnut (16) umgebende Druckkammern (23', 23'') eingearbeitet sind.

3. Druckmittelzuführungseinrichtung nach Anspruch 1 oder 2, dadurch gekennzeichnet, dass die Druckkammern (23, 23', 23'', 43) an den das Druckmittel führenden Kanal (17; 38') der Druckmittelzuführungseinrichtung (11; 31) oder an eine gesonderte Druckmittelquelle (Kanal 25, 25') angeschlossen sind.

4. Druckmittelzuführungseinrichtung nach Anspruch 3, dadurch gekennzeichnet, dass bei an den das Druckmittel führenden Kanal (17; 38') angeschlossenen Druckkammern (23; 43) deren in Richtung der Ringnut (16; 36) beaufschlagte Fläche grösser bemessen ist als die beaufschlagte Gegenfläche der Ringnut (16; 36).

5. Druckmittelzuführungseinrichtung nach einem oder mehreren der Ansprüche 1 bis 4, dadurch gekennzeichnet, dass die Druckkammer (23; 43) durch in die diese begrenzenden Bauteile (12, 22; 33, 42) eingesetzte Dichtungen (24; 44) abgedichtet ist.

## Claims

1. Device (11, 31) for the supply of fluid under pressure conducted from a stationary member (12, 32) into a rotating member (13, 33) located in the stationary member, particularly for the supply of fluid under pressure into a hollow tensioning cylinder or the like, whereby the members comprise a sealing slot (14, 34) and one of the members (12, 33) has an annular ring groove (16, 16', 36) located in the area of the sealing slot and feeding the fluid under pressure, which ring groove via a channel (17, 17'; 37) located in the stationary member (12, 32) is connected to a line supplying fluid under pressure and connected via a channel (13; 38', 38) in the rotating member (13, 33) to a consumer, characterized in that one of both elements (12, 33) on its side directed to the sealing slot (14, 34) has a thin walled elastically deformable ring (22, 42), whereby in the area of the ring groove (16, 36) at the ring's (22, 42) side directed away from the sealing slot (14, 34) an annular pressure chamber (23; 23', 23''; 43) is located provided to create a power directed to the ring (22, 42) in the direction of the sealing slot (14, 34) and connected to a source for the fluid under pressure.

2. Device for the supply of fluid under pressure of claim 1, characterized in that in one of both members (12) several pressure chambers (23', 23'') are provided, preferably separated from the channel (17) supplying fluid under pressure and are surrounding the ring groove (16).

3. Device for the supply of fluid under pressure of claim 1 or 2, characterized in that the pressure chambers (23, 23', 23'', 43) are connected to the channel (17; 38') feeding fluid under pressure or the fluid under pressure supply device or to a separate source (channel 25, 25') for the fluid under pressure.

4. Device for the supply of fluid under pressure of claim 3, characterized in that at the pressure chambers (23; 43) connected to the channel (17; 38') feeding fluid under pressure that surface directed to the ring groove (16; 36) has a greater extension than the activated counter surface of the ring groove (16, 36).

5. Device for the supply of fluid unter pressure of one or more of the claims 1 to 4, characterized in that the pressure chamber (23; 43) is sealed by sealings (24; 44) inserted into members (12, 22; 33, 42) limiting the pressure chamber.

## Revendications

1. Dispositif (11, 31) d'amenée d'un fluide sous pression depuis une pièce immobilisée (12, 32) dans une pièce rotative (13, 33) reposant dans cette dernière, destiné en particulier à l'alimentation en fluide sous pression d'un cylindre creux de serrage ou d'un dispositif analogue, ces pièces comportant une zone d'étanchéité (14, 34) et l'une des pièces (12, 33) disposant d'une cavité circulaire tournante (16, 16', 36) au voisinage de la zone d'étanchéité destinée à acheminer le fluide sous pression, qui est raccordée à une conduite d'amenée du fluide sous pression par un canal (17, 17', 37) pratiqué dans la pièce immobilisée (12, 32) et connectée à un récepteur par un canal (18, 38', 38) pratiqué dans la pièce rotative (13, 33), caractérisé par le fait que, l'une des deux pièces du dispositif (12, 33) est pourvue, sur sa face tournée vers la zone d'étanchéité (14, 34), d'un anneau d'étanchéité flexible de faible épaisseur (22, 42) qui la délimite, une chambre de pression rotative (23, 23', 23'', 43) étant disposée sur la face de l'anneau (22, 42) tournée vers la zone d'étanchéité (14, 34) au voisinage de la cavité circulaire (16, 36), laquelle est raccordée à une source de fluide sous pression afin de générer sur l'anneau (22, 42) une force dirigée en direction de la zone d'étanchéité (14, 34).

2. Dispositif d'amenée d'un fluide sous pression selon revendication 1, caractérisé par le fait que, dans l'une des deux pièces constituantes (12), sont usinées plusieurs chambres de pression (23', 23'') entourant la cavité circulaire (16), de préférence séparées du canal (17) d'alimentation en fluide sous pression.

3. Dispositif d'amenée d'un fluide sous pression selon revendication 1 ou 2, caractérisé par le fait que, les chambres de pression (23, 23', 23'', 43) sont raccordées, soit au canal (17, 38') servant à amener le fluide sous pression qui fait partie du dispositif d'amenée (11, 31), soit à une source de fluide sous pression autonome (canal 25, 25').

4. Dispositif d'amenée d'un fluide sous pression selon revendication 3, caractérisé par le fait que, la surface des chambres de pression (23, 43) raccordées au canal d'acheminement du fluide (17, 38') soumise à la pression en direction de la cavité circulaire (16, 36) est plus grande que la surface antagoniste sous pression de la cavité circulaire (16, 36).

5. Dispositif d'amenée d'un fluide sous pression selon une ou plusieurs des revendications 1 à 4, caractérisé par le fait que, la chambre de pression (23, 43) est rendue étanche par les joints (24, 44) placés dans les pièces (12, 22, 33, 42) du dispositif qui la délimitent.

FIG. 1

FIG. 2

FIG. 3